# FASCICULE DE BREVET EUROPEEN

(11) **EP 3 588 461 B1**
(45) Date de publication et mention de la délivrance du brevet: **30.12.2020**
(21) Numéro de dépôt: 19176817.5
(22) Date de dépôt: 27.05.2019
(51) Int. Cl.: G08C 17/02, H01H 89/00, H05B 47/19

(54) **SYSTÈME DE COMMANDE D'OBJETS CONNECTÉS, PROCÉDÉ DE COMMANDE ET PROGRAMME D'ORDINATEUR CORRESPONDANTS**
STEUERSYSTEM VON VERBUNDENEN OBJEKTEN, ENTSPRECHENDES STEUERVERFAHREN UND COMPUTERPROGRAMM
SYSTEM FOR CONTROLLING CONNECTED OBJECTS, CORRESPONDING CONTROL METHOD AND COMPUTER PROGRAM

(30) Priorité: 29.06.2018 FR 1855924
(43) Date de publication de la demande: 01.01.2020
(73) Titulaire: ORANGE, 75015 Paris (FR)
(72) Inventeur: BRUNEAU, Garry, 92326 CHATILLON (FR); QUESSON, Philippe, 92326 CHATILLON (FR)
(74) Mandataire: Vidon Brevets & Stratégie

(56) Documents cités:
- WO-A1-2012/168868
- CN-A- 104 023 429
- CN-U- 204 131 228
- US-A1- 2004 164 621

## Description

### 1. Domaine de l'invention

Le domaine de l'invention est celui des objets connectés, comme par exemple les ampoules connectées, les capteurs de température, les réfrigérateurs connectés ou encore les prises connectées.

Par objet connecté, on entend ici, et dans toute la suite de ce document, un objet électronique connecté sans fil et partageant des informations avec un ordinateur, une tablette électronique, un téléphone portable ou un autre appareil, tel qu'une passerelle d'accès à un réseau de communication local par exemple. Plus généralement, un objet connecté est un dispositif du monde réel (montre, ampoule, thermomètre, chaudière, ....) capable d'échanger directement ou indirectement des informations et des données avec le réseau Internet.

Plus précisément, l'invention concerne la commande de tels objets connectés notamment, mais non exclusivement, dans le cadre de leur usage domestique, au sein par exemple d'une habitation.

### 2. Art antérieur et ses inconvénients

De nos jours, les objets connectés ne se cantonnent plus seulement aux montres, aux bracelets ou aux lunettes, mais investissent également l'intérieur de nos habitations. Désormais, ces dernières intègrent divers objets connectés tels que des appareils de chauffage et/ou de climatisation, des éclairages, des prises électriques ou encore des équipements électroménagers.

Ces objets connectés ont l'avantage d'être pilotables à distance grâce à divers équipements de commande tels qu'un téléphone intelligent (en anglais « smartphone »), ou une tablette par exemple. Ainsi, il est possible pour un utilisateur, grâce à une application logicielle installée sur son « smartphone », de modifier l'intensité lumineuse de la pièce ou la couleur de l'éclairage de l'ampoule connectée fixée au plafond, sans avoir à se lever de son canapé. De même, l'utilisateur peut piloter, depuis son lieu de travail, à l'aide de son téléphone intelligent, la mise en route de son appareil de chauffage.

De nouveaux objets connectés arrivent chaque jour sur le marché, mais leur intégration au sein des habitations peut poser des problèmes pratiques d'utilisation.

L'exemple typique est celui de l'ampoule connectée. Celle-ci est pilotable par exemple grâce à un téléphone intelligent via un protocole de communication sans fil (comme par exemple le Bluetooth® ou le Wifi®), qui permet de modifier la couleur de la lumière diffusée, de moduler l'intensité lumineuse, ou plus simplement de commander son allumage ou son extinction. Son installation est simple : il suffit d'installer l'ampoule connectée dans un plafonnier ou une lampe et de la mettre sous tension, le cas échéant par actionnement d'un interrupteur connecté électriquement au plafonnier ou à la lampe.

Cependant, un des inconvénients de cette installation est que l'actionnement de l'interrupteur peut s'avérer incompatible avec le pilotage à distance de l'ampoule connectée par un équipement de commande de type téléphone intelligent ou tablette. En effet, si l'utilisateur, en quittant son salon, éteint l'ampoule en faisant basculer l'interrupteur associé en position ouverte, il ne lui est alors plus possible de rallumer l'ampoule par commande à distance au moyen de son « smartphone », tant qu'il n'a pas refait basculer l'interrupteur associé en position fermée, de façon à assurer l'alimentation électrique de l'ampoule connectée.

En effet, les ampoules connectées nécessitent d'être toujours sous tension afin d'être pilotables à distance.

Or, il arrive fréquemment que l'utilisateur, dans le cadre domestique, utilise classiquement l'interrupteur pour éteindre une ampoule connectée, soit par habitude ou geste réflexe, soit parce qu'il n'a pas à portée de main son téléphone intelligent et qu'il lui est donc plus simple et rapide d'utiliser l'interrupteur.

Cela l'oblige donc, lors d'une utilisation ultérieure, à remettre d'abord l'ampoule connectée sous tension en basculant l'interrupteur en position fermée, puis éventuellement à piloter son allumage au moyen de son téléphone intelligent, occasionnant ainsi des manipulations fastidieuses et nombreuses.

Le document US 2004/164621 A1 décrit un mécanisme enfichable, pour la télécommande sans fil d'un objet, comprenant un panneau de commande manuel, qui peut être installé sur un mur, et une unité enfichable.

Il apparaît donc que l'utilisation de l'interrupteur, présent par défaut dans toutes les installations électriques des habitations, peut s'avérer gênante, voire même incompatible avec le pilotage à distance des objets connectés par téléphone intelligent ou tablette. En effet, la fonction première de l'interrupteur, à savoir le pilotage de l'allumage ou de l'extinction de l'ampoule connectée, est désormais caduque, dans la mesure où, d'une part, l'ampoule doit toujours être sous tension pour être pilotable à distance via un équipement de commande, et où, d'autre part, il est impossible d'allumer, à partir d'un équipement de commande à distance, une ampoule connectée préalablement éteinte au moyen d'un interrupteur.

On retrouve ces mêmes inconvénients lors de l'utilisation de n'importe quel autre type d'objet connecté intégré à un circuit d'alimentation électrique commandé par un interrupteur.

Pour résoudre ces inconvénients, une solution simple pourrait consister à supprimer tous les interrupteurs des installations électriques domestiques, et à maintenir en permanence l'ensemble des objets connectés sous tension, afin de conditionner strictement leur commande à l'utilisation d'un équipement de commande à distance de type « smartphone ».

Quoique simple, cette solution présente cependant plusieurs inconvénients.

Tout d'abord, tous les utilisateurs de la maison ne sont pas équipés de « smartphones » ou de tablettes : on pense notamment aux enfants, qui ne pourraient par exemple plus éteindre la lumière d'une pièce, ce qui s'avérerait néfaste pour l'environnement, et consommateur en énergie électrique.

Ensuite, la suppression des interrupteurs constitue une opération lourde, qui nécessite de faire appel à un électricien professionnel.

En outre, il n'existe pas à ce jour de langage de communication normalisé, commun à l'ensemble des objets connectés présents sur le marché. Ainsi, les objets connectés présentent une grande diversité de langages de communication, qui sont souvent des langages de communication propriétaires, propres au fabricant de l'objet connecté.

Il en résulte que pour pouvoir commander un objet connecté par exemple grâce à son téléphone intelligent, il faut que ce dernier embarque autant d'applications qu'il existe de langages de communication de ces objets, ce qui peut devenir particulièrement compliqué à gérer lorsque l'on multiplie les objets connectés, et nécessiter une puissance de traitement et de mémorisation importante sur l'équipement de commande à distance.

Il existe donc un besoin d'une technique améliorée de commande des objets connectés, en particulier des objets connectés alimentés par un circuit d'alimentation électrique commandé par un interrupteur. Notamment, il existe un besoin d'une telle technique qui permette de pouvoir contrôler en permanence et facilement n'importe quel objet connecté grâce à un équipement de commande à distance, quelle que soit la position d'ouverture ou de fermeture de l'interrupteur qui lui est associé.

### 3. Exposé de l'invention

L'invention répond à ce besoin en proposant un système de commande d'au moins un objet connecté au moyen d'un interrupteur apte à basculer d'une position ouverte à une position fermée, et inversement,.

Selon l'invention, un tel système de commande comprend un dispositif de contrôle monté en parallèle de l'interrupteur dans un circuit d'alimentation électrique du ou des objet(s) connecté(s), et un tel dispositif de contrôle comprend un module de détection d'un changement de position de l'interrupteur et un module de communication apte à transmettre une information relative au changement de position détecté vers le ou les objet(s) connecté(s).

Ainsi, l'invention repose sur une approche tout à fait nouvelle et inventive de la commande des objets connectés alimentés par un circuit d'alimentation électrique, par exemple au sein d'une habitation.

En effet, l'invention propose d'isoler de manière très simple l'interrupteur du ou des objet(s) connecté(s), en montant en parallèle de l'interrupteur un dispositif de contrôle dans le circuit d'alimentation électrique de cet ou ces objet(s) connecté(s). Grâce à ce montage en parallèle, le ou les objet(s) connecté(s) reste(nt) toujours sous tension et donc toujours connecté(s) et donc pilotable(s) à distance par un équipement de commande qui peut être un téléphone intelligent de type « smartphone », ou une tablette par exemple.

Avantageusement, le dispositif de contrôle comprend un module de détection apte à détecter le changement de position de l'interrupteur et un module de communication apte à transmettre par la suite une information relative à ce changement de position détecté vers le ou les objet(s) connecté(s).

On améliore ainsi significativement l'ergonomie d'utilisation de l'objet connecté, qui peut en permanence être commandé, soit grâce à un équipement de commande à distance, soit classiquement par utilisation de l'interrupteur de l'installation électrique.

L'utilisation réflexe de l'interrupteur pour éteindre une ampoule connectée en sortant d'une pièce ne pose plus de problème lorsque l'utilisateur souhaite plus tard la rallumer au moyen de son téléphone intelligent, car le dispositif de contrôle selon un mode de réalisation de l'invention a permis de la maintenir sous tension, tout en transmettant une commande d'extinction à l'ampoule connectée.

Selon une première caractéristique, un tel module de communication est apte à recevoir une commande destinée à un ou des objet(s) connecté(s) en provenance d'un équipement de commande à distance et à transmettre la commande à ce ou ces objet(s) connecté(s) après éventuelle traduction de la commande dans un langage de communication adapté à ce ou ces objet(s) connecté(s).

Ainsi, le module de communication du dispositif de contrôle est capable de piloter l'objet connecté, non seulement à partir des commandes résultant du changement de position de l'interrupteur, mais également à partir de commandes reçues d'un équipement de commande à distance de type téléphone intelligent.

En outre, un tel module de communication intègre avantageusement les différents protocoles de communication propres à chacun des objets connectés et peut jouer le rôle de portail de traduction entre les langages de commande des différents équipements de commande à distance et ceux du ou des objet(s) connecté(s).

Cela simplifie et allège donc fortement l'installation d'applications sur l'équipement de commande à distance, auquel il suffit désormais d'intégrer une application compatible avec le langage de communication du dispositif de contrôle, à charge pour ce dernier de procéder à une éventuelle traduction d'une commande reçue du téléphone intelligent en une commande compréhensible par l'objet connecté.

En cas de modification des langages de communication des objets connectés, ou d'apparition d'un nouveau langage de communication, il est possible de procéder à une mise à jour rapide des logiciels embarqués sur l'ensemble des dispositifs de contrôle de l'habitation.

Selon une autre caractéristique, le module de communication est également apte à transmettre l'information relative au changement de position détecté vers au moins un autre objet connecté.

Ainsi, l'interrupteur destiné dans un premier temps à commander un ou plusieurs objet(s) connecté(s) en particulier, peut être reprogrammé afin de commander un ou plusieurs autres objet(s) connecté(s).

En effet, le dispositif de contrôle grâce à son module de communication est capable de transmettre le changement de position de l'interrupteur à un ou des objet(s) connecté(s) différents de ceux initialement prévu.

Ainsi, l'utilisateur peut décider que l'interrupteur disposé dans l'entrée de son habitation ne sera plus utilisé pour commander l'éclairage de l'entrée, mais plutôt l'éclairage extérieur du perron. On obtient ainsi une grande modularité et une grande souplesse de reconfiguration du réseau électrique de la maison, sans aucune intervention d'un électricien professionnel.

En effet, l'interrupteur n'est plus destiné à commander un ou plusieurs objet(s) connecté(s) localisé(s) à un endroit particulier de l'habitation, mais peut être reprogrammé pour contrôler un ou plusieurs objet(s) connecté(s) localisé(s) ailleurs dans l'habitation. Il devient ainsi très simple de changer l'aménagement de son habitation et d'adapter le pilotage par interrupteur des objets connectés en fonction de ses habitudes.

Selon un autre aspect de l'invention, un tel module de communication est également apte à transmettre l'information relative au changement de position détecté vers un dispositif de surveillance d'activité humaine, qui peut être par exemple un serveur local ou à distance accessible via une passerelle résidentielle.

En effet, l'information relative au changement de position de l'interrupteur, détecté par le module de détection du dispositif de contrôle, peut avantageusement être transmise par le module de communication à un serveur de « tracking », ou de surveillance : la détection de changement de position de l'interrupteur indique en effet une présence humaine dans la maison, et permet en outre de localiser avec précision cette présence humaine. Ce serveur de tracking peut être un serveur local ou distant, accessible via une passerelle résidentielle, qui peut être mis en œuvre dans le cadre d'un système de surveillance anti-intrusion, ou d'un système de contrôle parental par exemple.

Ainsi, différentes données d'utilisation des objets connectés peuvent être collectées comme par exemple le type d'objet connecté utilisé, les temps et les horaires d'utilisation ou encore la localisation de l'objet connecté dans l'habitation. Les données collectées permettent de déterminer un profil d'utilisation de ces objets connectés par un ou plusieurs utilisateurs, par exemple qui est présent à un instant donné dans l'habitation et si cette présence est habituelle et normale à un tel horaire ou non.

Dans l'exemple des ampoules connectées, le module de communication du dispositif de contrôle transmet à un dispositif de surveillance d'activité humaine une information relative à l'allumage et/ou l'extinction d'une ou plusieurs ampoules connectées. Il est donc possible de savoir si quelqu'un est présent dans l'habitation et, si oui, où, par exemple dans le garage ou dans une chambre. Il est donc possible en regroupant les données d'horaire, de temps et de lieu d'utilisation des ampoules connectées de savoir qui est présent, mais également d'anticiper la présence d'un utilisateur en particulier.

On peut donc envisager par la suite de programmer une alarme prévenant d'une utilisation inhabituelle d'un objet connecté particulier en lien avec une présence non prévue dans l'habitation ou alors avec un oubli d'extinction de cet objet.

Avantageusement, la collecte de ces données d'utilisation des objets connectés permet de proposer aux utilisateurs une programmation d'utilisation de ces objets en fonction de leurs habitudes et de leurs besoins. Il est donc possible par exemple de proposer d'anticiper l'arrivée d'un utilisateur en allumant certains objets connectés en particulier, à un horaire donné.

Selon un autre aspect, un tel module de communication est apte à transmettre l'information relative au changement de position détecté vers le ou les objet(s) connecté(s) au travers d'une passerelle d'accès à un réseau de communication local, encore appelée passerelle résidentielle, auquel est connecté le ou les objet(s) connecté(s).

Ainsi, dans cette variante, le module de communication ne transmet pas directement à l'objet connecté la commande de pilotage (reçue d'un équipement de commande à distance, ou générée sur détection d'un changement de position de l'interrupteur), mais la transmet à une passerelle résidentielle ou domestique du réseau de communication local auquel est connecté l'objet connecté. C'est ensuite la passerelle résidentielle qui relaie cette commande vers l'objet connecté (par exemple en Wi-Fi 2.4).

Selon encore un autre aspect, un tel dispositif de contrôle comprend également des moyens d'interruption du circuit d'alimentation électrique du ou des objet(s) connecté(s), qui sont actionnés lorsque le module de détection détecte un changement de position de l'interrupteur vers une position ouverte et/ou lorsque le module de communication reçoit une commande d'extinction du ou des objet(s) connecté(s) en provenance d'un équipement de commande à distance.

On évite ainsi avantageusement la consommation électrique résiduelle associée à la mise sous tension permanente des objets connectés. Le dispositif de contrôle peut ainsi intégrer un interrupteur disposé sur le circuit d'alimentation électrique de l'objet connecté, qui peut contrôler le passage du courant dans le circuit l'alimentation électrique du ou des objet(s) connecté(s). L'interrupteur du dispositif de contrôle peut être ouvert, et interrompre la circulation du courant électrique vers l'objet connecté, lorsque le dispositif de contrôle détecte que l'utilisateur a basculé l'interrupteur mural en position « OFF », et/ou lorsqu'il reçoit une commande d'extinction de l'objet connecté en provenance d'un équipement de commande à distance.

Ainsi, le dispositif de contrôle, grâce à ses moyens d'interruption du circuit d'alimentation électrique du ou des objet(s) connecté(s), permet une optimisation de la consommation électrique au sein de l'habitation.

L'invention concerne également un procédé de commande d'au moins un objet connecté relié à un circuit d'alimentation électrique sur lequel est disposé un interrupteur apte à basculer d'une position ouverte à une position fermée, et inversement. Un tel procédé de commande comprend :
- une étape de mise sous tension permanente dudit au moins un objet connecté ;
- une étape de détection d'un changement de position dudit interrupteur ; et
- une étape de transmission d'une information relative audit changement de position détecté vers ledit au moins un objet connecté.

L'invention concerne encore un produit programme d'ordinateur comprenant des instructions de code de programme pour la mise en œuvre des étapes du procédé de commande précité, lorsqu'il est exécuté par un processeur.

Ce procédé de commande et ce programme d'ordinateur présentent en combinaison les mêmes caractéristiques et avantages que ceux décrits précédemment en relation avec le système de commande selon les différents modes de réalisation de l'invention.

### 4. Liste des figures

D'autres buts, caractéristiques et avantages de l'invention apparaîtront plus clairement à la lecture de la description suivante, donnée à titre de simple exemple illustratif, et non limitatif, en relation avec les figures, parmi lesquelles :
- les **figures 1A, 1B****,** **1C** présentent différentes configurations d'une installation électrique domestique d'un objet connecté pilotable par un équipement de commande à distance, selon l'art antérieur;
- la **figure 2** illustre une structure matérielle du système de commande d'un ou plusieurs objet(s) connecté(s) alimenté(s) par un circuit électrique selon un mode de réalisation de l'invention ;
- la **figure 3** présente une structure matérielle du système de commande d'un ou plusieurs objet(s) connecté(s) alimenté(s) par un circuit électrique selon un autre mode de réalisation de l'invention;
- la **figure 4** illustre, selon un mode particulier de l'invention, une structure matérielle du système de commande d'un ou plusieurs objet(s) connecté(s) alimenté(s) par un circuit électrique et connecté(s) au travers d'une passerelle d'accès à un réseau de communication local ;
- les **figures 5A, 5B****,** **5C** présentent différents modes de réalisation particuliers de la **figure 3**, dans lesquels le dispositif de contrôle intègre des moyens d'interruption du circuit d'alimentation électrique de l' objet connecté ;
- la **figure 6** présente un mode particulier de réalisation de la **figure 5B** dans lequel l'objet connecté a accès au réseau de communication local à travers le dispositif de contrôle;
- la **figure 7** propose un schéma synoptique simplifié de la structure matérielle du dispositif de contrôle selon un mode de réalisation de l'invention.

### 5. Description détaillée de modes de réalisation de l'invention

Le principe général de l'invention repose sur l'insertion, dans le circuit d'alimentation électrique d'un objet connecté, d'un dispositif de contrôle, monté en parallèle d'un interrupteur de commande de l'objet connecté, qui permet, non seulement d'assurer le maintien sous tension électrique permanent de l'objet connecté, quelle que soit la position de l'interrupteur, mais également de commander l'objet connecté pour en piloter le fonctionnement.

L'insertion d'un tel dispositif de contrôle permet une reconfiguration simple du circuit d'alimentation électrique d'un ou plusieurs objet(s) connecté(s), en le(s) isolant de l'interrupteur responsable de l'ouverture et/ou de la fermeture de leur circuit d'alimentation électrique.

Ainsi, le(s) objet(s) connecté(s), comme par exemple les ampoules connectées ou les prises connectées, sont pilotables par un équipement de commande à distance, mais également par un interrupteur classique. On désigne par la suite par équipement de commande à distance, seuls ou en combinaison, les éléments suivants:
- un téléphone intelligent TEL ;
- une passerelle d'accès à un réseau de communication local, encore nommée passerelle résidentielle ;
- une passerelle constructeur. Par passerelle constructeur, on entend une passerelle de communication embarquant un protocole radio propriétaire de communication avec un objet connecté, qui traduit dans un langage de communication propre à l'objet connecté une commande provenant d'un autre équipement comme un téléphone intelligent et/ou une passerelle résidentielle. Ce langage de communication est généralement propre au constructeur de l'objet connecté.

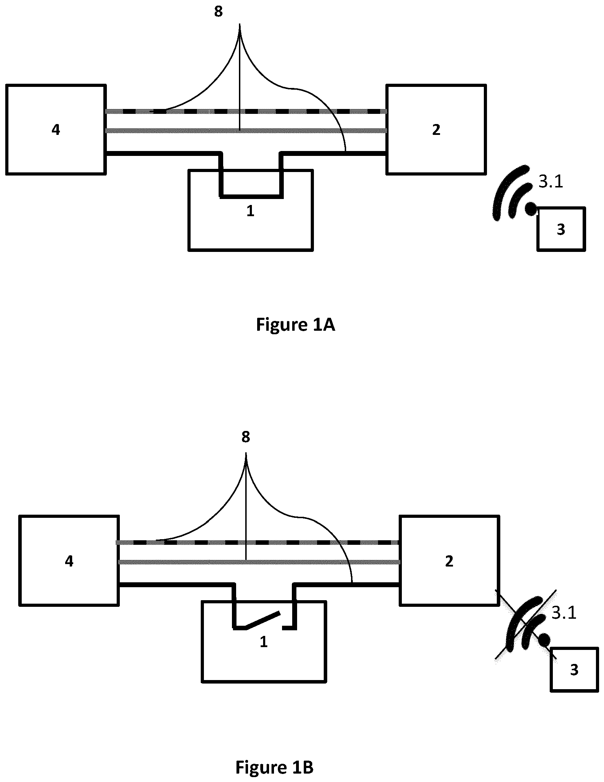

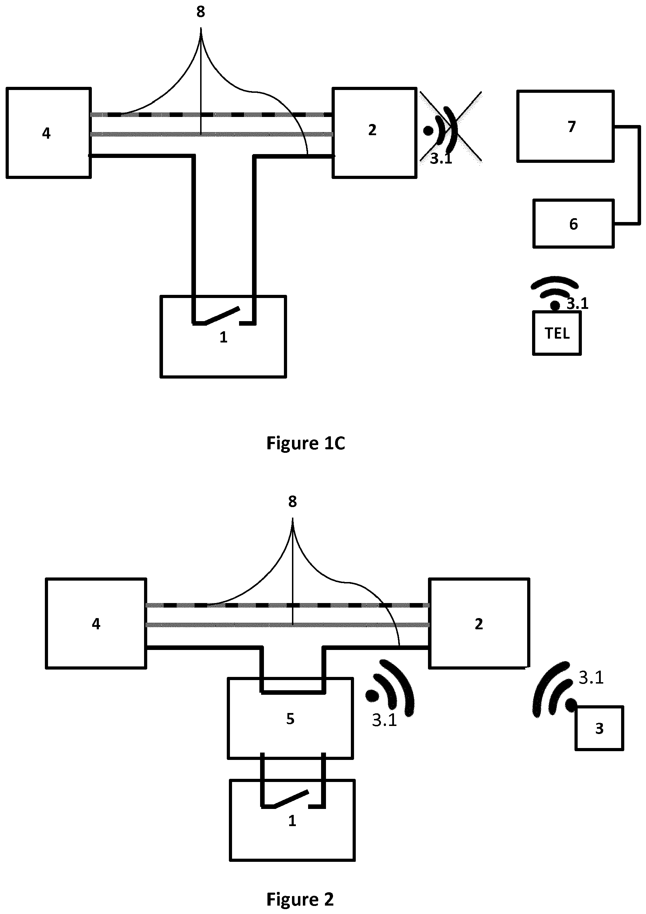

On présente désormais, en relation avec les **figures 1A, 1B** **et** **1C****,** des exemples de la structure générale connue d'un circuit d'alimentation 8 d'un ou plusieurs objet(s) connecté(s) 2, comme par exemple une ampoule connectée de type LiFx®, ou encore Philips Hue®, ou des prises connectées comme par exemple SmartPlug®, ou encore Wemo®. Sur la **figure 1A****,** un ou plusieurs objet(s) connecté(s) 2 est/sont relié(s) au tableau électrique 4 à travers un circuit d'alimentation électrique 8. Par souci de simplification, un seul objet connecté 2 est illustré sur les figures ci-après. Un interrupteur 1 apte à passer d'une position fermée, illustrée en **figure 1A****,** à une position ouverte, illustrée en **figure 1B****,** et inversement, commande l'objet connecté 2 en interrompant ou autorisant le passage du courant électrique dans le circuit d'alimentation 8 de l'objet connecté 2. On notera que l'interrupteur 1 permet de piloter l'allumage ou l'extinction de l'objet connecté, mais aussi, par exemple, dans le cas d'une ampoule connectée de faire varier la couleur de l'éclairage ou de moduler son intensité lumineuse.

Lorsque l'interrupteur 1 est en position fermée, comme illustré en **figure 1A****,** l'objet connecté 2 est alimenté et peut ainsi être piloté plus finement grâce à un équipement de commande à distance 3, par exemple un téléphone intelligent ou une tablette. Cet équipement de commande à distance 3 pilote l'objet connecté en transmettant une commande 3.1, qui peut être véhiculée par une connexion sans fil de type Wifi®, Bluetooth® ou encore Zigbee® ou alors une connexion filaire de type courants porteurs en ligne (ou CPL). La commande transmise par l'équipement de commande à distance 3 vers l'objet connecté 2 peut concerner par exemple l'allumage et/ou l'extinction, ou encore la mise en fonction de différents modes d'utilisation de l'objet connecté 2. Ainsi, dans l'exemple d'une ampoule connectée, on peut grâce à son téléphone intelligent 3 commander à distance l'allumage et/ou l'extinction de l'ampoule, mais également le changement de couleur de l'ampoule, ou une diminution/augmentation de l'intensité lumineuse de celle-ci.

La **figure 1B** illustre le cas où l'interrupteur 1 est ouvert, interrompant le passage du courant électrique dans le circuit d'alimentation 8 de l'objet connecté 2. L'objet connecté 2 n'est plus sous tension et en conséquence, ne peut plus être piloté par l'équipement de commande à distance 3 via une commande 3.1. Cette situation pose problème et manque d'ergonomie pour l'utilisateur.

La **figure 1C** illustre un cas particulier dans lequel l'interrupteur 1 est ouvert, interrompant le passage du courant électrique dans le circuit d'alimentation 8 de l'objet connecté 2. L'objet connecté 2 n'est plus sous tension et en conséquence, ne peut plus être piloté par un équipement de commande à distance, comprenant, dans cet exemple, un téléphone intelligent TEL, une passerelle résidentielle 6 et une passerelle constructeur 7. Le téléphone intelligent TEL envoie une commande 3.1 destinée à un ou plusieurs objet(s) connecté(s) à la passerelle résidentielle 6 qui reçoit et transmet cette commande à la passerelle constructeur 7. A son tour la passerelle constructeur 7 reçoit et transmet la commande en la traduisant dans un langage de communication propre à l'objet connecté 2. Toutefois, l'objet connecté 2 n'étant pas sous tension, il ne peut donc pas exécuter la commande.

Ainsi, selon la solution de l'art antérieur, pour pouvoir utiliser l'objet connecté 2, il faut que l'interrupteur soit toujours en position fermée.

La **figure 2** présente un système de commande selon un mode de réalisation de l'invention comprenant un interrupteur 1 et un dispositif de contrôle 5. Le dispositif de contrôle 5 est monté en parallèle de l'interrupteur 1 dans le circuit d'alimentation électrique 8 de l'objet connecté 2. Le changement de position ON/OFF de l'interrupteur 1 n'agit alors plus directement sur l'alimentation électrique de l'objet connecté 2. Le montage en parallèle du dispositif de contrôle 5 et de l'interrupteur 1 dans le circuit d'alimentation électrique 8 permet à l'objet connecté 2 d'être toujours sous tension car le circuit d'alimentation électrique 8 reste en permanence fermé.

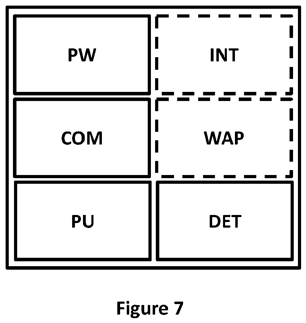

Comme il sera présenté par la suite en lien avec la **figure 7**, le dispositif de contrôle 5 comprend un module de détection DET apte à détecter les changements de position, ouverte ou fermée, de l'interrupteur 1. Le dispositif de contrôle comprend également un module de communication COM qui transmet, à l'objet connecté 2 ou à un équipement distant (notamment à l'équipement de commande à distance de l'objet connecté) une information relative au changement de position détecté de l'interrupteur 1. En d'autres termes, le module de communication COM du dispositif de contrôle 5 envoie une commande d'allumage et/ou d'extinction à/aux objet(s) connecté(s) en fonction de la position fermée ou ouverte de l'interrupteur 1.

Ainsi, lorsque l'interrupteur 1 passe d'une position fermée à une position ouverte, le module de détection DET détecte ce changement de position, et le module de communication COM transmet ensuite à l'objet connecté 2 une information concernant ce changement de position, sous forme d'une commande 3.1. Dans cet exemple, le passage en position ouverte de l'interrupteur 1 signifie que l'utilisateur souhaite éteindre l'objet connecté 2. Le module de communication COM envoie donc une commande 3.1 d'extinction de l'objet connecté 2. Etant donné que l'objet connecté 2 est toujours sous tension, celui-ci reste pilotable par un équipement de commande à distance 3.

L'objet connecté 2 peut alors être rallumé par une commande envoyée par l'équipement de commande à distance 3, mais également, si le module de détection DET détecte le passage d'une position ouverte à une position fermée de l'interrupteur 1, par l'envoi d'une commande d'allumage par le module de communication COM.

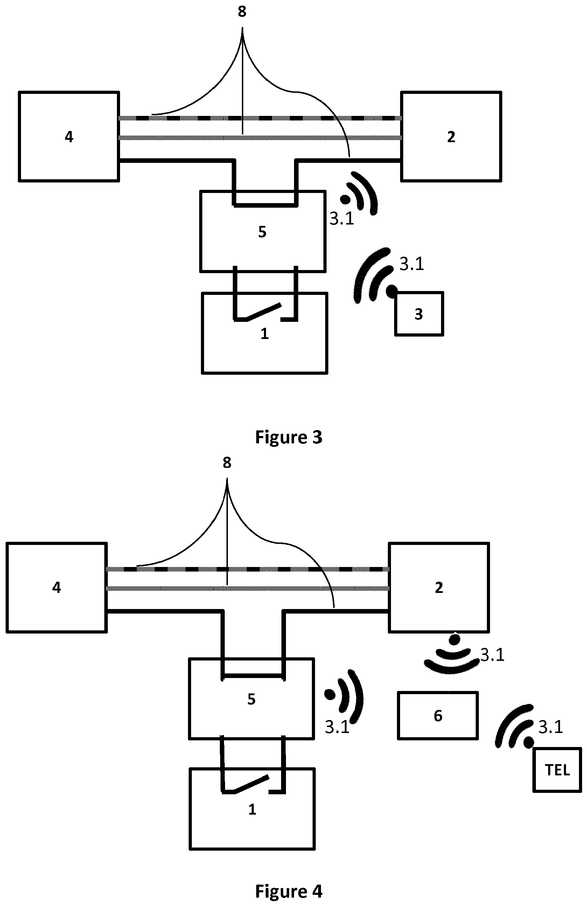

On présente en lien avec la **figure 3** un mode de réalisation particulier de l'invention, dans lequel l'équipement de commande à distance 3 ne transmet plus directement ses commandes à l'objet connecté 2, mais indirectement par l'intermédiaire du module de communication COM du dispositif de contrôle 5, qui reçoit puis retransmet à l'objet connecté 2 la commande qui lui est destinée. Avant retransmission, le dispositif de contrôle peut également procéder à une traduction de la commande reçue de l'équipement 3 en un langage interprétable par l'objet connecté 2.

En effet, le module de communication COM du dispositif de contrôle 5 intègre les différents langages de communication de différents objets connectés 2 existant sur le marché. Cela simplifie le traitement côté équipement de contrôle à distance 3, qui n'a plus besoin d'intégrer les différents langages de communication existants, hormis celui qui lui permet de dialoguer avec le dispositif de contrôle 5.

Le dispositif de contrôle 5 joue donc un rôle d'intermédiaire, d'une part entre un équipement de commande à distance 3 via son module de communication COM et/ou l'interrupteur 1 via son module de détection DET, et d'autre part l'objet connecté 2.

Selon un autre mode de réalisation de l'invention, le module de communication COM du dispositif de contrôle 5 est également apte à transmettre à un serveur local ou distant accessible via une passerelle résidentielle 6 des données liées aux informations relatives au changement de position détecté, c'est à dire à l'utilisation d'un ou plusieurs objet(s) connecté(s) 2 via commande de l'interrupteur 1.

Ainsi, la collecte de ces données d'utilisation des objets connectés 2 permet de proposer aux utilisateurs une programmation d'utilisation de ces objets en fonction de leur habitude et de leur besoin, mais également de prévenir par une alerte envoyée par exemple sur le téléphone intelligent de l'utilisateur de la présence inhabituelle de quelqu'un dans l'habitation. Par exemple, si les données collectées montrent qu'habituellement un objet connecté, typiquement une ampoule connectée située dans le garage, s'allume à partir de 19h, alors il est possible d'en déduire qu'un utilisateur en particulier vient de rentrer chez lui. En cas d'une présence inhabituelle, une alerte peut alors être mise en place si un autre objet connecté, comme par exemple une autre ampoule située cette fois dans la salon, est par exemple allumée à cet horaire au lieu de celle du garage.

On représente en lien avec la **figure 4** un mode de réalisation particulier de l'invention dans lequel le pilotage d'un ou plusieurs objet(s) connecté(s) 2 se fait au travers d'une passerelle résidentielle 6. Un objet connecté 2 est connecté à travers une passerelle d'accès à un réseau de communication local, ou passerelle résidentielle 6. L'objet connecté 2 est toujours sous tension grâce au dispositif de contrôle 5 monté en parallèle de l'interrupteur 1. Lorsque le module de détection DET du dispositif de contrôle 5 détecte un changement de position de l'interrupteur 1, le module de communication COM du dispositif de contrôle 5 transmet une information relative au changement détecté à l'objet connecté 2 au travers de la passerelle résidentielle 6. La passerelle résidentielle 6 reçoit et transmet également à l'objet connecté 2 une commande pouvant provenir d'un autre équipement comme par exemple un téléphone intelligent TEL.

L'objet connecté 2, par exemple une ampoule, est alors connecté au réseau de communication domestique via une passerelle résidentielle 6 constituant point d'accès au réseau. L'ampoule connectée 2 est toujours sous tension.

Le dispositif de contrôle 5 émet les mêmes trames que le téléphone intelligent 3 pour allumer et éteindre l'ampoule 2.

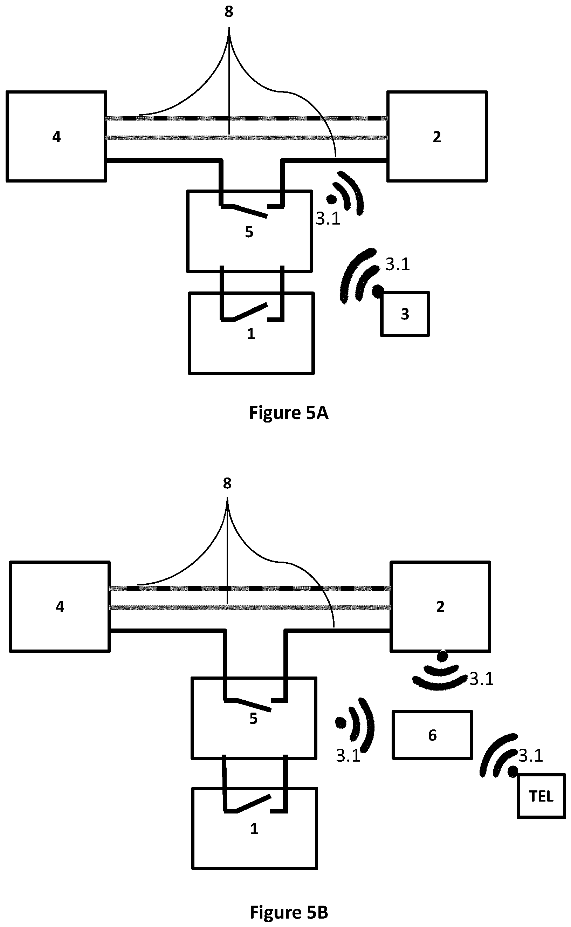

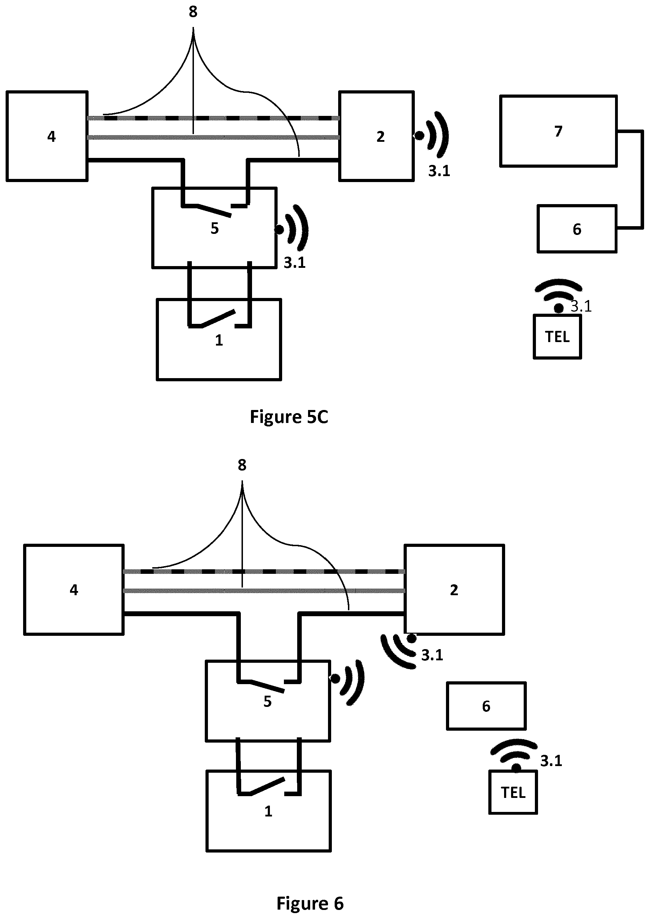

Les **figures 5A, 5B** **et** **5C** présentent des modes particuliers de réalisation de la **figure 3** dans lesquels le dispositif de contrôle 5 comprend des moyens d'interruption INT du circuit d'alimentation électrique 8 du/des l'objet(s) connecté(s) 2. Dans le mode de réalisation présenté dans **la** **figure 5A****,** le module de communication COM du dispositif de contrôle 5 reçoit et transmet une commande 3.1 destinée à un ou plusieurs objet(s) connecté(s) 2 d'un équipement de commande à distance 3. Le changement de position de l'interrupteur 1 peut également piloter le(s) objet(s) connecté(s) 2 grâce à la présence des modules de détection DET et de communication COM du dispositif de contrôle 5. Comme précédemment décrit en relation avec la **figure 3****,** le dispositif de contrôle 5 joue un rôle d'intermédiaire entre ces différents éléments. Le dispositif de contrôle 5 peut donc grâce à ses moyens d'interruptions INT couper le circuit d'alimentation électrique 8 lorsque le module de détection DET du dispositif de contrôle 5 détecte un changement de position de l'interrupteur 1 vers une position ouverte et/ou lorsque le module de communication COM du dispositif de contrôle 5 reçoit une commande d'extinction du ou des objet(s) connecté(s) en provenance de l'équipement de commande à distance 3.

La **figure 5B** présente un autre mode de réalisation particulier de la **figure 3** dans lequel le module de communication COM du dispositif de contrôle 5 reçoit une commande à destination du ou des objet(s) connecté(s) 2 par un téléphone intelligent TEL. Le téléphone intelligent TEL envoie à une passerelle résidentielle 6 la commande destinée à un ou plusieurs objet(s) connecté(s) 2. Cette passerelle résidentielle 6 reçoit et transmet cette commande au module de communication COM du dispositif de contrôle 5, puis la transmet à/aux objet(s) connecté(s) 2. Comme précédemment, les moyens d'interruptions INT du dispositif de contrôle 5 peuvent couper le circuit d'alimentation électrique 8 du ou des objet(s) connecté(s) 2. Dans ce mode de réalisation, l'objet connecté 2, par exemple une ampoule, est connectée au réseau de communication domestique dont la passerelle résidentielle constitue point d'accès. Le réseau de communication local est configuré pour re-router les appels à l'objet connecté 2 au dispositif de contrôle 5. Ce dernier joue le rôle de proxy et peut couper l'alimentation de l'ampoule 2 lorsqu'elle est éteinte. Il peut également mettre sous tension l'ampoule 2 lorsqu'il voit passer une demande d'allumage.

La **figure 5C** présente encore un autre mode de réalisation particulier de la **figure 3** dans lequel le module de communication COM du dispositif de contrôle 5 reçoit une commande à destination du ou des objet(s) connecté(s) 2 par un téléphone intelligent TEL. Le téléphone intelligent TEL envoie à une passerelle résidentielle 6 la commande destinée à un ou plusieurs objet(s) connecté(s) 2. Cette passerelle résidentielle 6 reçoit et transmet cette commande à une passerelle constructeur 7. Cette passerelle constructeur 7 reçoit, puis transmet cette commande au module de communication COM du dispositif de contrôle 5, puis la transmet à/aux objet(s) connecté(s) 2. Comme précédemment, les moyens d'interruptions INT du dispositif de contrôle 5 peuvent couper le circuit d'alimentation électrique 8 du ou des objet(s) connecté(s) 2.

Les modes de réalisation précédemment décrits ont l'avantage de permettre une coupure du circuit d'alimentation électrique 8 d'un ou plusieurs objet(s) connecté(s) lorsque l'utilisateur souhaite éteindre ce ou ces objet(s) connecté(s), et donc une optimisation de la consommation électrique de l'habitation. Cette coupure permet à l'utilisateur de ne pas consommer plus d'électricité que dans un système classique sans objet(s) connecté(s), et de moins consommer qu'en utilisant un objet connecté commandé de manière classique avec un interrupteur, qui doit donc toujours être en position fermée.

La **figure 6** est un mode particulier de réalisation de la **figure 5B** dans lequel le dispositif de contrôle 5 possède un point d'accès Wi-Fi® à un réseau local de communication sur lequel est connecté l'objet connecté 2. Le dispositif de contrôle 5 joue le rôle de proxy et peut couper l'alimentation de l'ampoule 2 lorsqu'elle est éteinte. Il peut également mettre sous tension l'ampoule 2 lorsqu'il voit passer une demande d'allumage.

En effet, le dispositif de contrôle 5 joue toujours le rôle d'intermédiaire grâce à ses modules de détection DET et de communication COM. Les moyens d'interruption INT du dispositif de contrôle 5 peuvent couper l'alimentation de ou des objet(s) connecté(s) 2 lorsque le module de communication COM reçoit une commande d'extinction d'équipements de commande à distance (ici un téléphone intelligent TEL et une passerelle résidentielle 6) ou alors lorsque le module de détection DET détecte le passage d'une position fermée à une position ouverte de l'interrupteur 1. Les moyens d'interruption INT du dispositif de contrôle 5 peuvent également mettre sous tension le ou les objet(s) connecté(s) 2 lorsque le module de communication COM reçoit une commande d'allumage d'équipements de commande à distance TEL, 6 ou alors lorsque le module de détection DET détecte le passage d'une position ouverte à une position fermée de l'interrupteur 1.

On présente maintenant en lien avec la **figure 7** un exemple d'une structure matérielle du dispositif de contrôle 5. Le dispositif de contrôle 5 est alimenté par une unité d'alimentation PW et comprend des mémoires associées à un microprocesseur PU qui exécute et traite les instructions données au dispositif de contrôle 5. Les mémoires peuvent être de type ROM (de l'anglais *« Read Only Memory»*) ou RAM (de l'anglais *« Random Access Memory»*) ou encore Flash. Le processeur PU est piloté par un programme d'ordinateur, stocké dans une mémoire morte (par exemple une mémoire ROM ou un disque dur). A l'initialisation, les instructions de code du programme d'ordinateur sont par exemple chargées dans la mémoire vive avant d'être exécutées par le processeur PU. Le processeur PU pilote la détection de changement de position de l'interrupteur par le module de détection DET, ainsi que la gestion des réceptions et transmissions de commandes par le module de communication COM. Le module de communication COM est apte à recevoir de la part d'équipements de commande à distance 3 une commande à destination d'un ou plusieurs objet(s) connecté(s), et/ou transmettre cette commande et/ou une information relative à un changement de position d'un interrupteur 1 à/aux objet(s) connecté(s) concerné(s). Cette transmission peut se faire par une communication 3.1 directe avec le(s) objet(s) connecté(s) 2 et/ou à travers une passerelle résidentielle 6. Afin que le module de communication COM puisse transmettre une information relative à un changement de position détecté, le dispositif de contrôle 5 comprend également un module de détection DET d'un changement de position de l'interrupteur 1. En d'autres termes, le module de détection DET est apte à détecter si l'interrupteur 1 passe d'une position ouverte, à une position fermée.

Lorsque le dispositif de contrôle 5 joue le rôle d'intermédiaire, c'est à dire lorsque le module de communication COM reçoit et transmet à un ou plusieurs objet(s) connecté(s) la commande qui lui est /leur sont envoyée(s) par des équipements de commande à distance 3 comme illustré dans les **figures 5A, 5B****,** **5C et 6****,** le dispositif de contrôle comprend également des moyens d'interruption INT du circuit d'alimentation électrique 8.

Le dispositif de contrôle 5 peut également comprendre dans le cas du mode de réalisation de la **figure 6** un module d'accès à un réseau de communication local WAP (hotspot Wi-Fi®) permettant à/aux objet(s) connecté(s) 2 d'avoir accès à ce réseau de communication.

La **figure 7** illustre seulement une manière particulière, parmi plusieurs possibles, de réaliser le dispositif de contrôle 5, afin qu'il effectue les étapes du procédé de commande selon l'invention (dans l'un quelconque des différents modes de réalisation, ou dans une combinaison de ces modes de réalisation). En effet, ces étapes peuvent être réalisées indifféremment sur une machine de calcul reprogrammable (un ordinateur PC, un processeur DSP ou un microcontrôleur) exécutant un programme comprenant une séquence d'instructions, ou sur une machine de calcul dédiée (par exemple un ensemble de portes logiques comme un FPGA ou un ASIC, ou tout autre module matériel).

## Revendications

1. Système de commande d'au moins un objet connecté (2) au moyen d'un interrupteur (1) apte à basculer d'une position ouverte à une position fermée, et inversement, **caractérisé en ce qu'**il comprend un dispositif de contrôle (5) pouvant être monté en parallèle dudit interrupteur (1) dans un circuit d'alimentation électrique (8) dudit au moins un objet connecté (2), **et en ce que** ledit dispositif de contrôle (5) comprend :
- un module de détection (DET) d'un changement de position dudit interrupteur (1) ; et
- un module de communication (COM) apte à transmettre une information (3.1) relative audit changement de position détecté vers ledit au moins un objet connecté.

2. Système de commande selon la revendication 1, **caractérisé en ce que** ledit module de communication (COM) est apte à recevoir une commande (3.1) destinée audit au moins un objet connecté (2) en provenance d'un équipement de commande à distance (3) et à transmettre ladite commande (3.1) audit au moins un objet connecté (2) après éventuelle traduction de ladite commande dans un langage de communication adapté audit au moins un objet connecté (2).

3. Système de commande selon l'une quelconque des revendications 1 et 2, **caractérisé en ce que** ledit module de communication (COM) est également apte à transmettre ladite information relative audit changement de position détecté vers au moins un autre objet connecté (2).

4. Système de commande selon l'une quelconque des revendications 1 à 3, **caractérisé en ce que** ledit module de communication (COM) est également apte à transmettre ladite information relative audit changement de position détecté vers un dispositif de surveillance d'activité humaine.

5. Système de commande selon l'une quelconque des revendications 1 à 4, **caractérisé en ce que** ledit module de communication (COM) est apte à transmettre ladite information relative audit changement de position détecté vers ledit au moins un objet connecté (2) au travers d'une passerelle d'accès à un réseau de communication local (6) auquel est connecté ledit au moins un objet connecté (2).

6. Système de commande selon l'une quelconque des revendications 1 à 5, **caractérisé en ce que** ledit dispositif de contrôle (5) comprend également des moyens d'interruption (INT) dudit circuit d'alimentation électrique (8) dudit au moins un objet connecté (2) actionnés lorsque ledit module de détection (DET) détecte un changement de position dudit interrupteur (1) vers une position ouverte.

7. Système de commande selon l'une quelconque des revendications 1 à 6, **caractérisé en ce que** ledit dispositif de contrôle (5) comprend également des moyens d'interruption (INT) dudit circuit d'alimentation électrique (8) dudit au moins un objet connecté (2) actionnés lorsque ledit module de communication (COM) reçoit une commande d'extinction dudit au moins un objet connecté (2) en provenance dudit équipement de commande à distance (3).

8. Procédé de commande d'au moins un objet connecté (2) relié à un circuit d'alimentation électrique sur lequel est disposé un interrupteur (1) apte à basculer d'une position ouverte à une position fermée, et inversement,
**caractérisé en ce qu'**il comprend :
- une étape de mise sous tension permanente dudit au moins un objet connecté ;
- une étape de détection d'un changement de position dudit interrupteur (1) ; et
- une étape de transmission d'une information relative audit changement de position détecté vers ledit au moins un objet connecté.

9. Produit programme d'ordinateur comprenant des instructions de code de programme pour la mise en œuvre des étapes du procédé de commande selon la revendication 8, lorsqu'il est exécuté par un processeur.

## Patentansprüche

1. System zur Steuerung mindestens eines verbundenen Objekts (2) mittels eines Unterbrechers (1), der von einer offenen Stellung in eine geschlossene Stellung und umgekehrt kippen kann, **dadurch gekennzeichnet, dass** es eine Kontrollvorrichtung (5) enthält, die mit dem Unterbrecher (1) in einer elektrischen Versorgungsschaltung (8) des mindestens einen verbundenen Objekts (2) parallelgeschaltet werden kann, und dass die Kontrollvorrichtung (5) enthält:
- ein Erfassungsmodul (DET) einer Stellungsänderung des Unterbrechers (1); und
- ein Kommunikationsmodul (COM), das eine Information (3.1) bezüglich der erfassten Stellungsänderung an das mindestens eine verbundene Objekt übertragen kann.

2. Steuersystem nach Anspruch 1, **dadurch gekennzeichnet, dass** das Kommunikationsmodul (COM) eine für das mindestens eine verbundene Objekt (2) bestimmte Steuerung (3.1) von einem Fernsteuerungsgerät (3) empfangen und die Steuerung (3.1) an das mindestens eine verbundene Objekt (2) nach möglicher Übersetzung der Steuerung in eine an das mindestens eine verbundene Objekt (2) angepasste Kommunikationssprache übertragen kann.

3. Steuersystem nach einem der Ansprüche 1 und 2, **dadurch gekennzeichnet, dass** das Kommunikationsmodul (COM) ebenfalls die Information bezüglich der erfassten Stellungsänderung an mindestens ein anderes verbundenes Objekt (2) übertragen kann.

4. Steuersystem nach einem der Ansprüche 1 bis 3, **dadurch gekennzeichnet, dass** das Kommunikationsmodul (COM) ebenfalls die Information bezüglich der erfassten Stellungsänderung an eine Überwachungsvorrichtung einer menschlichen Aktivität übertragen kann.

5. Steuersystem nach einem der Ansprüche 1 bis 4, **dadurch gekennzeichnet, dass** das Kommunikationsmodul (COM) die Information bezüglich der erfassten Stellungsänderung an das mindestens eine verbundene Objekt (2) über ein Zugangs-Gateway zu einem lokalen Kommunikationsnetz (6) übertragen kann, mit dem das mindestens eine verbundene Objekt (2) verbunden ist.

6. Steuersystem nach einem der Ansprüche 1 bis 5, **dadurch gekennzeichnet, dass** die Kontrollvorrichtung (5) ebenfalls Unterbrechungseinrichtungen (INT) der elektrischen Versorgungsschaltung (8) des mindestens einen verbundenen Objekts (2) enthält, die betätigt werden, wenn das Erfassungsmodul (DET) eine Stellungsänderung des Unterbrechers (1) in eine offene Stellung erfasst.

7. Steuersystem nach einem der Ansprüche 1 bis 6, **dadurch gekennzeichnet, dass** die Kontrollvorrichtung (5) ebenfalls Unterbrechungseinrichtungen (INT) der elektrischen Versorgungsschaltung (8) des mindestens einen verbundenen Objekts (2) enthält, die betätigt werden, wenn das Kommunikationsmodul (COM) vom Fernsteuerungsgerät (3) einen Abschaltbefehl des mindestens einen verbundenen Objekts (2) empfängt.

8. Verfahren zur Steuerung mindestens eines verbundenen Objekts (2), das mit einer elektrischen Versorgungsschaltung verbunden ist, auf der ein Unterbrecher (1) angeordnet ist, der von einer offenen Stellung in eine geschlossene Stellung und umgekehrt kippen kann,
**dadurch gekennzeichnet, dass** es enthält:
- einen Schritt des permanenten Unterspannungsetzens des mindestens einen verbundenen Objekts;
- einen Schritt der Erfassung einer Stellungsänderung des Unterbrechers (1); und
- einen Schritt der Übertragung einer Information bezüglich der erfassten Stellungsänderung an das mindestens eine verbundene Objekt.

9. Computerprogrammprodukt, das Programmcodeanweisungen zur Durchführung der Schritte des Steuerverfahrens nach Anspruch 8 enthält, wenn es von einem Prozessor ausgeführt wird.

## Claims

1. System for controlling at least one connected object (2) by using a switch (1) capable of switching from an open position to a closed position and vice versa, **characterized in that** it comprises a regulation device (5) that can be connected in parallel with said switch (1) in an electrical power supply circuit (8) of said at least one connected object (2), and **in that** said regulation device (5) comprises:
- a module for detecting (DET) a change in position of said switch (1); and
- a communication module (COM) configured to transmit information (3.1) relating to said detected change in position to said at least one connected object.

2. Control system according to Claim 1, **characterized in that** said communication module (COM) is able to receive a command (3.1) addressed to said at least one connected object (2) coming from a remote control equipment (3) and to transmit said command (3.1) to said at least one connected object (2) after translation, if necessary, of said command into a communication language suitable for said at least one connected object (2).

3. Control system according to either of Claims 1 and 2, **characterized in that** said communication module (COM) is also able to transmit said information relating to said detected change in position to at least one other connected object (2).

4. Control system according to any one of Claims 1 to 3, **characterized in that** said communication module (COM) is also able to transmit said information relating to said detected change in position to a device for monitoring human activity.

5. Control system according to any one of Claims 1 to 4, **characterized in that** said communication module (COM) is able to transmit said information relating said detected change in position to said at least one connected object (2) through an access gateway to a local-area communication network (6) to which said at least one connected object (2) is connected.

6. Control system according to any one of Claims 1 to 5, **characterized in that** said regulation device (5) also comprises interrupting means (INT) for interrupting said electrical power supply circuit (8) of said at least one connected object (2) which are actuated when said detection module (DET) detects a change in position of said switch (1) to an open position.

7. System according to any one of Claims 1 to 6, **characterized in that** said regulation device (5) also comprises interrupting means (INT) for interrupting said electrical power supply circuit (8) of said at least one connected object (2) which are actuated when said communication module (COM) receives a command for switching off said at least one connected object (2) coming from said remote control equipment (3).

8. Method for controlling at least one connected object (2) connected to an electrical power supply circuit on which there is arranged a switch (1) capable of switching from an open position to a closed position and vice versa,
**characterized in that** it comprises:
- a step of permanently powering said at least one connected object;
- a step of detecting a change in position of said switch (1); and
- a step of transmitting information relating to said detected change in position to said at least one connected object.

9. Computer program product comprising program code instructions for the implementation of the steps of the control method according to Claim 8, when it is executed by a processor.
